# EUROPEAN PATENT APPLICATION

(11) **EP 1 069 519 A2**
(43) Date of publication of application: **17.01.2001**
(21) Application number: 00113593.8
(22) Date of filing: 27.06.2000
(51) Int. Cl.: G06F 17/60

(54) **Customer terminal apparatus, its system, image saving system, and recording medium which records that program**

(30) Priority: 16.07.1999 JP 20243199; 23.07.1999 JP 20882599
(71) Applicant: Casio Computer Co., Ltd., Shibuya-ku, Tokyo (JP)
(72) Inventor: Mizuno, Kimiyasu, Casio Computer Co., Ltd., Hamura-shi, Tokyo 205-8555 (JP); Kasahara, Takeshi, Casio Computer Co., Ltd., Hamura-shi, Tokyo 205-8555 (JP); Takahashi, Hiroki, Casio Computer Co., Ltd., Hamura-shi, Tokyo 205-8555 (JP)
(74) Representative: Grünecker, Kinkeldey, Stockmair & Schwanhäusser Anwaltssozietät

(57) **Abstract**

When an advertiser turns on an advertisement registration button on a console (5), and inputs an image of advertisement information by operating the console (5) in accordance with a menu displayed on a display unit (6), a controller (7) registers and saves the image of the advertisement information in a storage unit (15). When a customer turns on a photo image print button on the console (5) and selects a free print mode from a fee menu displayed on the display unit (6), the controller (7) reads a photo image in a memory card loaded into a recording medium insert mechanism (10), and stores it in the storage unit (15). The controller (7) then reads out the saved image of the advertisement information and composites it with the read photo image, and makes a printer (18) print the composite image via a printer control unit (17).

## Description

The present invention relates to a customer terminal apparatus such as an automatic vending machine, its system, an image saving system, and a recording medium which records that program.

Business owners and retailers have demands for placing various advertisements to soar sales figures of their goods or services for sale.

Conventionally, such business owner or retailer has a printing office form leaflets, and requests a newspaper agent to deliver their leaflets in between newspapers.

However, upon forming leaflets, troublesome procedures are required to entrust the printing office with such job. Also, the delivery area is limited, and such leaflets are highly likely to be thrown away without being noticed. Therefore, the advertising effect of such leaflets is lower than that obtained when an advertisement is directly put on a newspaper.

On the other hand, when an advertisement is put on a newspaper, inquiry of a newspaper publishing company, meeting with art advertisement agent, and the like are cumbersome, and the advertising fee is very high. Therefore, the load of cost on small-scale business owners and retailers are too heavy.

On the other hand, when such business owners or retailers want to build their home pages on the Internet that has prevailed recently, and place their advertisements, they must inquire of a home page supervisor via a service provider, create an image of advertisement information using a personal computer, send the created image of advertisement information to that supervisor, and require the supervisor to paste the image of advertisement information on the home pages.

For this reason, since troublesome procedures are required, and they must have skills in operations for creating and editing an image on a personal computer, the load on business owners or retailers as advertisers is heavy.

On the other hand, automatic vending machines or the like, which can issue various kinds of prints for pay, are known. Such apparatuses include the one, which receives a recording medium that stores a photo image sensed by a digital camera, and prints the photo image in accordance with user operations.

However, when the recording medium becomes full of sensed image data on a journey, and no more unrecorded recording medium is available, the user cannot sense any more images unless he or she deletes recorded images.

It is an object of the present invention to place an advertisement having a high advertising effect with low cost without requiring any troublesome procedures.

It is another object of the present invention to allow the user to proceed with image sensing without deleting images recorded in a recording medium even when the recording medium becomes full of sensed image data.

The present invention provides an advertisement registration system including a plurality of terminal apparatuses in each of which advertisement information for a customer who uses the terminal apparatus is registered, and a terminal management apparatus which is connected to the plurality of customer terminal apparatuses via communications, wherein each of the terminal apparatuses registers and saves input advertisement information in predetermined storage means, reads out and outputs the advertisement information saved in the storage means every time the customer uses the terminal apparatus, and sends the newly saved advertisement information to the terminal management apparatus, and when the terminal management apparatus receives advertisement information from an arbitrary terminal apparatus and an advertising area included in the received advertisement information designates another terminal apparatus other than the arbitrary terminal apparatus, the terminal management apparatus transfers the received advertisement information to the other terminal apparatus and makes that terminal apparatus save the received advertisement information.

Also, the present invention provides an image saving system including a plurality of terminal apparatuses each of which outputs an image by a customer operation, and a terminal management apparatus which is connected to the plurality of terminal apparatuses via communications, wherein when the customer designates to save an image, each of the terminal apparatuses sends the image to be saved to the terminal management apparatus, and the terminal management apparatus saves the image received from the terminal apparatus, and sends an image to be read out to an arbitrary terminal apparatus upon receiving a saved image read request from the arbitrary terminal apparatus.

According to the present invention, advertisement information can be easily input in accordance with a menu and guidance displayed on an advertisement registration terminal apparatus without requiring any troublesome procedures such as meeting with a third party upon placing an advertisement. Since an advertisement is formed by operating the advertisement registration terminal apparatus by the advertiser himself or herself, he or she needs not require an advertisement printing office to form an advertisement. For this reason, since neither personnel expenses nor cost for creating any block copy are required, an advertisement having a high advertising effect can be placed at low cost.

Also, since advertisement information registered in a given terminal apparatus can be sent to another terminal apparatus via a communication line, the advertisement information can be registered and saved in a plurality of terminal apparatuses deployed over a broad range, and an advertisement can be placed for many customers.

Furthermore, according to the present invention, even when a recording medium becomes full of data during image sensing, subsequent image sensing can be continued without deleting images recorded on that recording medium.

Moreover, extra copies of a photo to be distributed to a plurality of friends at different remote places can be simultaneously delivered in real time.

In addition, since a large number of photo images that were sensed, e.g., on a journey with many other things to do can be thoroughly reviewed after his or her return home, and only required ones can be printed, unwanted images can be prevented from being printed, and the user needs not carry a large number of printed photos.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing the outer appearance of an advertisement registration terminal apparatus according to an embodiment of the present invention;
FIG. 2 is a block diagram showing the arrangement of the advertisement registration terminal apparatus;
FIG. 3 is a block diagram showing the arrangement of a printer;
FIG. 4 is a diagram showing the arrangement of a system including a plurality of advertisement registration terminal apparatuses and a center apparatus;
FIG. 5 is a block diagram showing the arrangement of the center apparatus;
FIG. 6 is a flow chart showing a main process of the advertisement registration terminal apparatus;
FIG. 7 is a flow chart showing a main process of a center apparatus;
FIGS. 8A to 8C are flow charts of an advertisement registration process;
FIG. 9 shows a display window of an advertisement frame pattern menu;
FIG. 10 shows a display window of a layout position menu of an advertisement image;
FIG. 11 shows a display window of a base fee system menu;
FIG. 12 shows the data format of an advertisement file of the advertisement registration terminal apparatus;
FIG. 13 shows the data format of an advertisement table of the advertisement registration terminal apparatus;
FIGS. 14A and 14B illustrate flow charts showing a print process;
FIG. 15 is a flow chart showing a reception process shown in FIG. 7;
FIG. 16 shows the data format of an advertisement master file in the center apparatus;
FIG. 17 is a flow chart showing a sending process;
FIG. 18 shows the data format of a terminal file in the center apparatus;
FIG. 19 is a flow chart showing a reception process;
FIG. 20 is a flow chart showing a maintenance process;
FIG. 21 shows data in a saved image file stored in a terminal management apparatus;
FIGS. 22A and 22B are flow charts of a start button process of an image print terminal apparatus; and
FIG. 23 is a flow chart showing a main process in the terminal management apparatus.

### (First Embodiment)

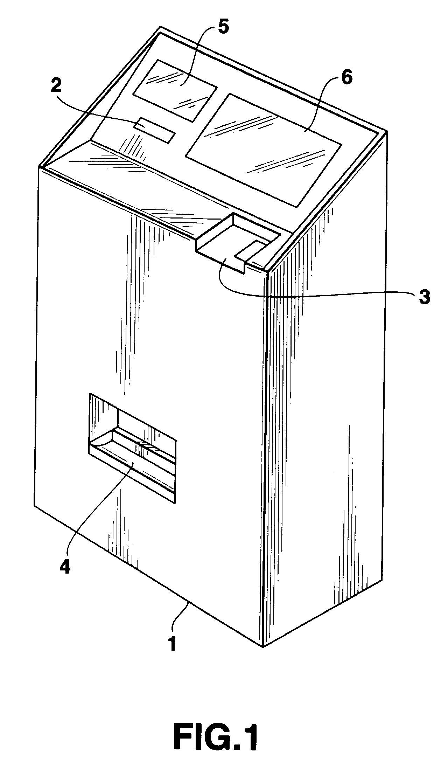

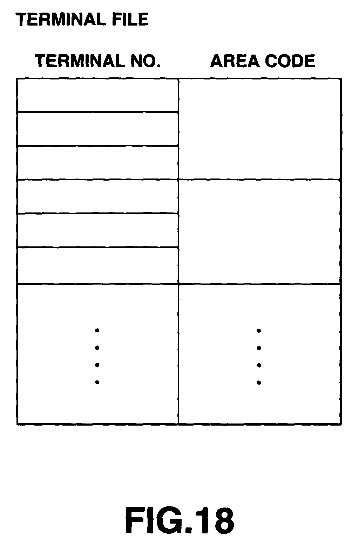

The first embodiment of the present invention will be described below with reference to FIGS. 1 to 20.

FIG. 1 shows the outer appearance of an advertisement registration terminal apparatus (to be simply referred to as a "terminal apparatus" hereinafter) 1, which prints an image by customer operations and automatically sells the printed image, and can register advertisement information by operations of an advertiser.

The terminal apparatus 1 has a recording medium insert port 2 for receiving a recording medium of photo image data (to be simply referred to as a "photo image" hereinafter) sensed by a digital camera on its upper portion. This embodiment uses as a recording medium a memory card called a CF (compact flash) card capable of storing photo images of several to several 10 Mbytes. As other recording media, a PC card, smartmedia card, MO (magnetooptical disk), FD (floppy disk), and the like may be used.

Note that image data of advertisement information (to be simply referred to as an "advertisement image" hereinafter) that an advertiser registers can also be inserted from the recording medium insertion port 2 as a photo image sensed by a digital camera.

The terminal apparatus 1 also has a fee insert/return port 3 in which the customer inserts paper money and coins for a print fee or advertisement fee and from which he or she receives money inserted upon cancel or change at another position of its upper portion.

Furthermore, the terminal apparatus 1 has a printed photo outlet port 4 from which a print of a photo image is discharged on its lower portion.

Moreover, the terminal apparatus 1 has a console 5 including various buttons that the customer or advertiser operates, and a display unit 6 for displaying guidance messages, a fee, and the like on its upper portion.

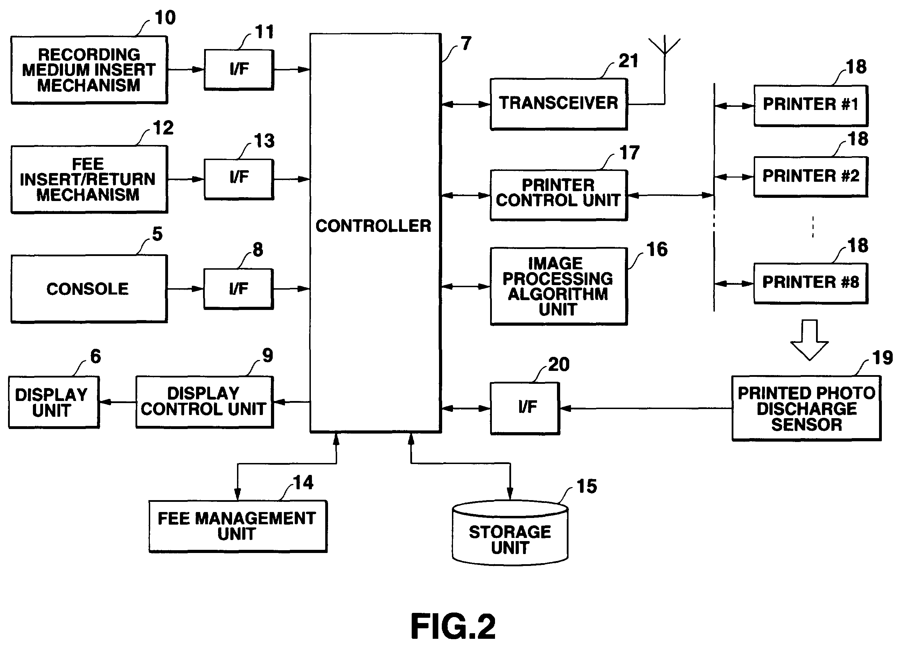

FIG. 2 is a block diagram showing the arrangement of a control device in the terminal apparatus 1. A controller 7 comprises a ROM that stores a program, a control module for controlling the entire terminal apparatus 1 in accordance with the program, and various registers required for control.

An interface (I/F) 8 detects ON/OFF states of the individual buttons on the console 5 in response to a scan signal from the controller 7, and inputs the detected states to the controller 7.

A display control unit 9 renders image data supplied from the controller 7 to one frame, and outputs it to the display unit 6, thus displaying the rendered data. A recording medium insert mechanism 10 is constructed by a mechanism for loading and unloading a memory card, its driving unit, and an image reader for reading a photo image recorded on the loaded memory card.

An interface 11 controls the recording medium insert mechanism 10 in accordance with a control command from the controller 7, and inputs a photo image read by the recording medium insert mechanism 10 to the controller 7. A fee insert/return mechanism 12 detects, sorts, and inspects inserted paper money and coins, and exhausts paper money and coins to be returned.

An interface 13 inputs a detection signal, sort signal, and inspection signal from the fee insert/return mechanism 12 to the controller 7.

A fee management unit 14 stores a plurality of kinds of fee system data as a table.

The controller 7 looks up that table to select a corresponding fee system on the basis of data input from the console 5.

A storage unit 15 stores images of registered advertisement information, and temporarily stores a photo image read from the memory card loaded into the recording medium insert mechanism 10.

An image processing algorithm unit 16 executes an image processing algorithm for a photo image and an advertisement image.

Note that the image processing algorithm can be implemented by software by the storage unit 15 and the controller 7 that executes a program in place of a hardware image processing algorithm unit 16, when an arithmetic processor that constructs the control module of the controller 7 has high processing speed.

A printer control unit 17 controls eight printers 18 connected to the apparatus, and outputs a print command and print data from the controller 7 to the printers 18.

A printed photo exhaust sensor 19 checks if prints printed by the printers 18 are discharged to the printed photo outlet port 4. An interface 20 inputs the detection result of the printed photo discharge sensor 19 to the controller 7.

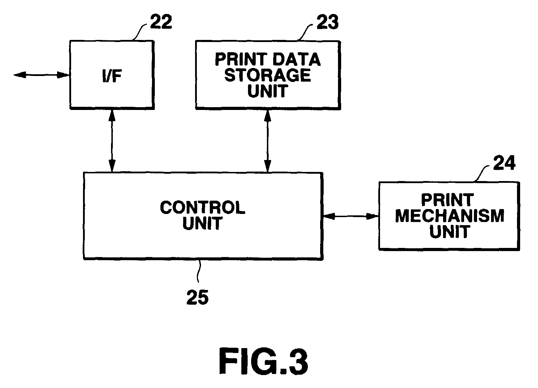

As shown in FIG. 3, each printer 18 comprises an interface 22 for exchanging commands such as a print command and the like, and print data with the printer control unit 17, a print data storage unit 23 for temporarily storing print data, and a print mechanism unit 24 for actually printing an image.

A control unit 25 renders print data supplied from the printer control unit 17 via the interface 22 into a print format, stores it in the print data storage unit 23, reads out the stored data, and supplies the readout data to the print mechanism unit 24.

A transceiver 21 shown in FIG. 2 is a communication means which makes the terminal apparatus 1 serve as a communication terminal apparatus. The transceiver 21 comprises a versatile PHS or portable phone, and establishes a connection to a public telephone network using a telephone number as unique identification information.

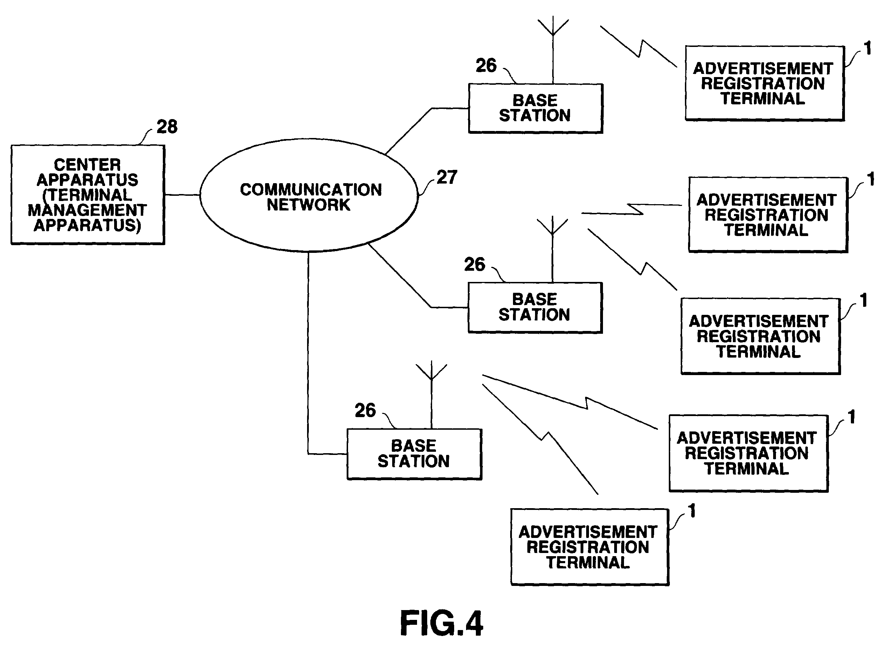

FIG. 4 shows the system arrangement built by connecting a plurality of terminal apparatuses 1 to a public communication network.

Each terminal apparatus 1 is connected to a nearest base station 26 by radio via the transceiver 21 shown in FIG. 2.

A plurality of base stations 26 are connected to a public communication network 27 via lines. A center apparatus 28 which serves as a terminal management apparatus for managing the terminal apparatuses 1 is connected to public communication network 27.

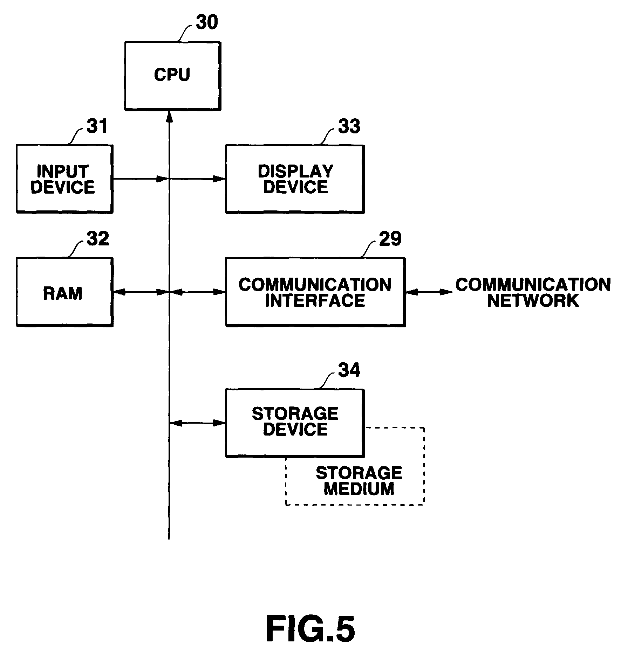

FIG. 5 is a block diagram showing the internal arrangement of the center apparatus 28.

A communication interface 29 connects the public communication network 27 and center apparatus 28 shown in FIG. 4. A CPU 30 receives and originates calls from and to the individual terminal apparatuses 1 via a communication interface 29 connected thereto via the internal bus.

Also, the CPU 30 exchanges commands and data with an input device 31, RAM 32, display device 33, and storage device 34 connected thereto via the internal bus, and controls the entire center apparatus 28.

The input device 31 inputs programs and data required for terminal management.

The RAM 32 temporarily stores data processed by the CPU 30. The display device 33 displays the state of the center apparatus 28, and also displays total data to be described later.

The storage device 34 stores and saves advertisement information registered at each terminal apparatus 1, and also stores an advertisement master file (to be described later).

The operations of each terminal apparatus 1 and center apparatus 28 of this embodiment will be described below with reference to the flow charts of the controller 7 of the terminal apparatus and the CPU 30 of the center apparatus 28, and other drawings.

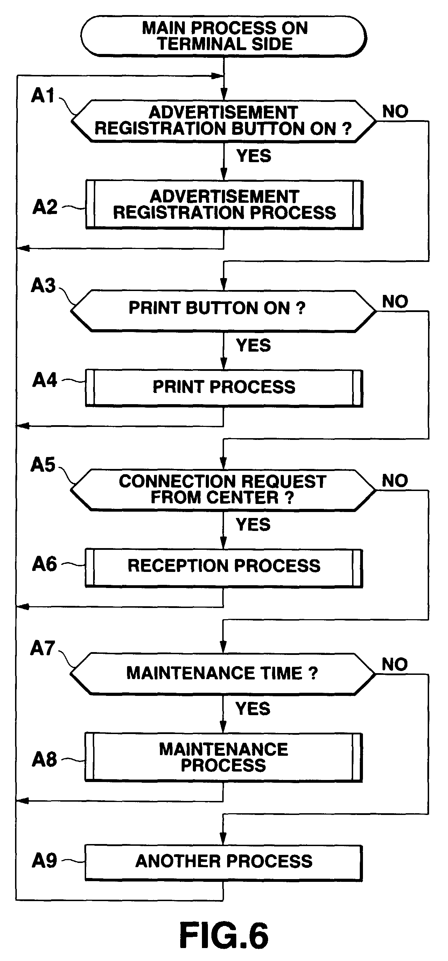

FIG. 6 shows the flow of a main process executed by each terminal apparatus.

In this flow, an ON event of a button on the console is detected, and a process is executed in accordance with the ON button. That is, the controller 7 checks if an advertisement registration button is ON (step A1). If Y (YES) in step A1, the controller 7 executes an advertisement registration process (step A2).

The controller 7 checks if a print button of the console is ON (step A3). If Y in step A3, the controller 7 executes a print process (step A4). The controller 7 checks if a connection request from the center apparatus is received (step A5). If Y in step A5, the controller 7 executes a reception process (step A6).

The controller 7 also checks if a predetermined maintenance time (e.g., 0:00 AM) has been reached (step A7). If Y in step A7, the controller 7 executes a maintenance process (step A8). The controller 7 executes another process (step A9), and the flow returns to step A1 to repeat the aforementioned processes.

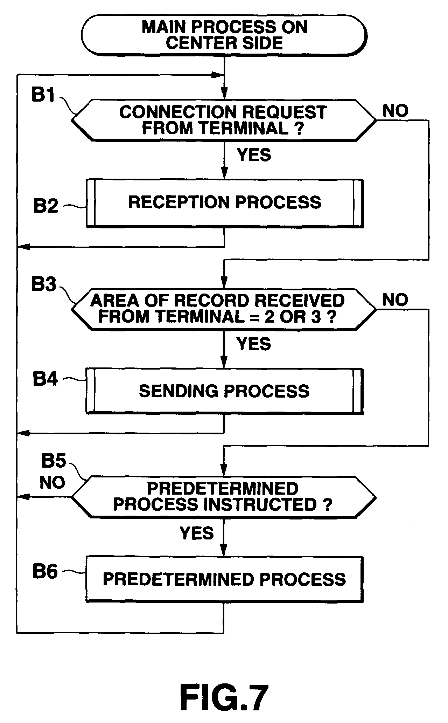

FIG. 7 shows the flow of a main process executed by the center apparatus.

In this flow, the CPU 30 checks if a connection request from an arbitrary terminal apparatus is received (step B1). If Y in step B1, the CPU 30 establishes a connection to that terminal apparatus, and executes a reception process (step B2).

After advertisement information registered in that terminal apparatus is received, the CPU 30 checks if the advertising area of a record as the received advertisement information is "2" (indicating a local area where a plurality of terminal apparatuses are set) or "3" (indicating a nationwide area) (step B3). If Y in step B3, the CPU 30 executes a sending process to other terminal apparatuses included in that advertising area (step B4).

The CPU 30 then checks if a predetermined process instruction is input from the input device (step B5). If Y in step B5, the CPU 30 executes the predetermined process (step B6). The flow returns to step B1 to repeat the aforementioned processes.

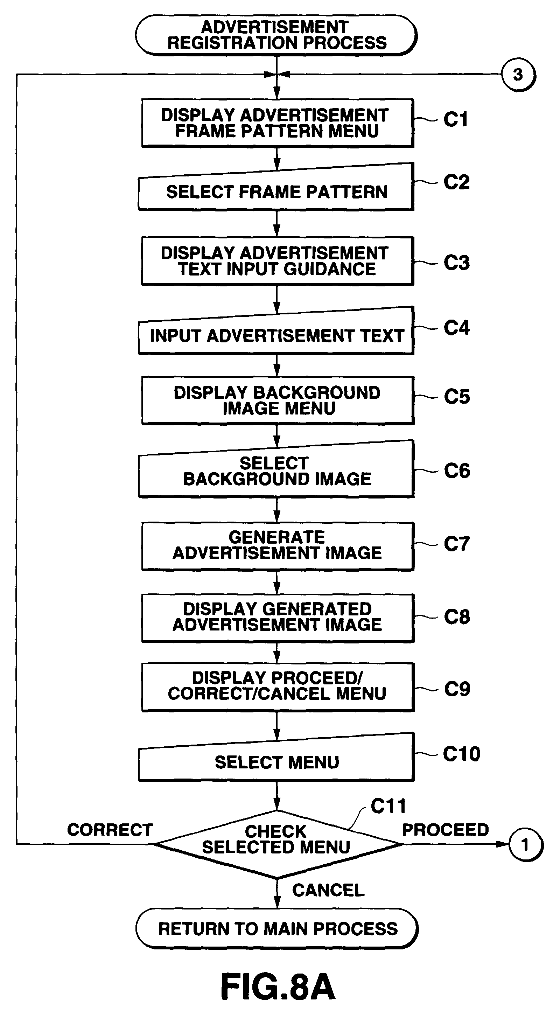

FIGS. 8A to 8C show the flow of the advertisement registration process in step A2 in the main process of the terminal apparatus shown in FIG. 6.

In the flow shown in FIG. 8A, the controller 7 displays an advertisement frame pattern menu (step C1).

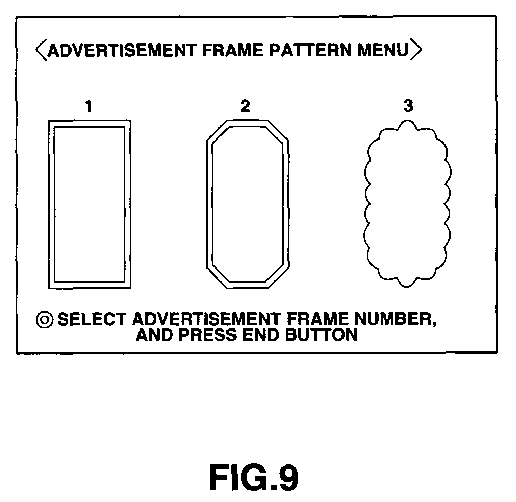

FIG. 9 shows the window of the advertisement frame pattern menu. If a given advertisement frame pattern is selected (step C2), the controller 7 displays an advertisement text input guidance (step C3).

After advertisement text is input according to the guidance (step C4), the controller 7 displays a background image menu (step C5). If a given background image is selected (step C6), the controller 7 generates an advertisement image on the basis of the advertisement frame pattern, advertisement text, and background image (step C7). Then, the controller 7 displays the generated advertisement image (step C8).

The controller 7 displays a proceed/correct/cancel menu (step C9). If one of menu items is selected, the controller 7 discriminates the selected menu item (step C10).

If "correct" is selected, the flow returns to step C1 to display the advertisement frame patterns again, and the controller 7 repeats the processes up to step C10. If "cancel" is selected, the controller 7 ends this flow, and returns to the main process shown in FIG. 6.

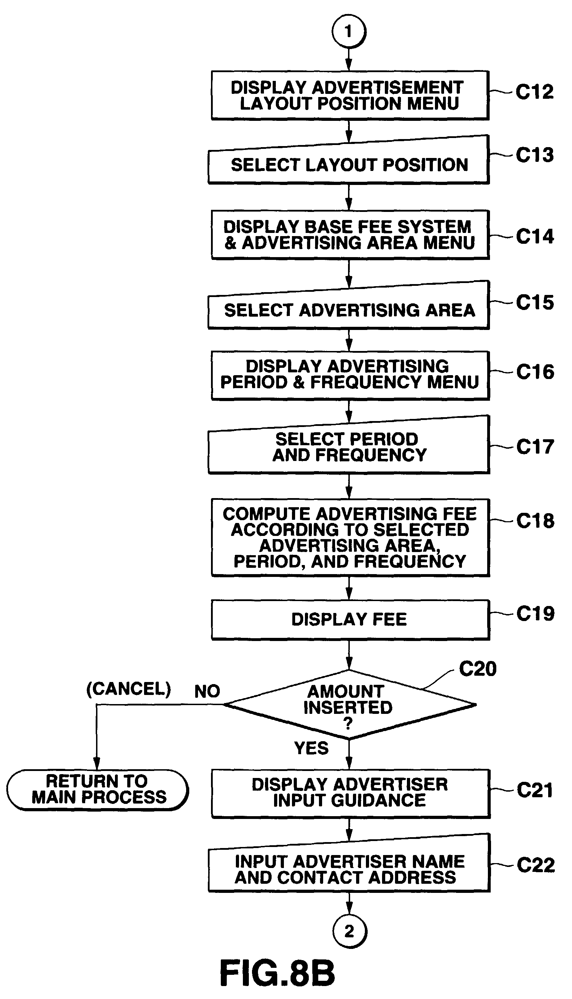

If "proceed" is selected, the controller starts the flow shown in FIG. 8B, and displays an advertisement image layout position menu (step C12).

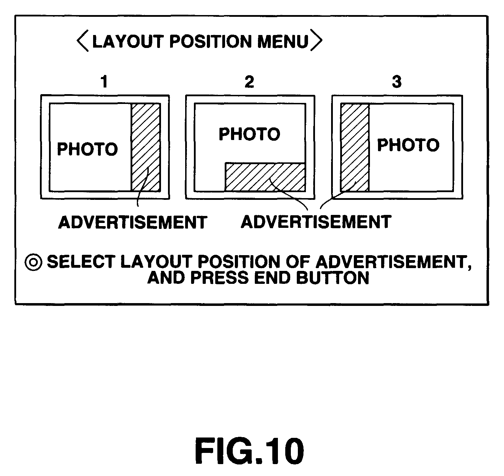

FIG. 10 shows the window of the layout position menu. If the layout position of the advertisement image is selected (step C13), the controller 7 displays a base fee system menu and an advertising area menu (step C14).

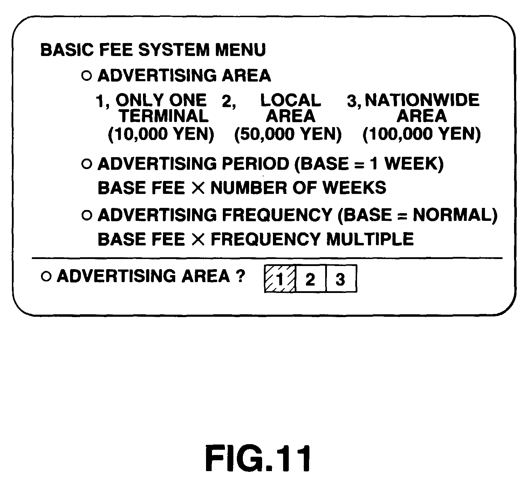

FIG. 11 shows the window of the base fee system and advertising area menus.

An advertising fee is selected in accordance with the advertising area, advertising period, and advertising frequency. The advertising area can be selected from 1. only one terminal apparatus at which the advertiser is now inputting advertisement information, 2. a local area where that terminal apparatus is set, and 3. a nationwide area, and different fees are set in correspondence with these advertising areas.

As for the advertising period, the fee is set in units of weeks. As for the advertising frequency, the fee is set by multiplying that for a normal frequency by a frequency multiple (e.g., double frequency, triple frequency, and so forth). On the lower side of the window, a menu for selecting one of advertising areas "1", "2", and "3" is displayed.

After an advertising area is selected (step C15), the controller 7 clears the advertising area menu on the lower side of the window shown in FIG. 11, and displays a menu for selecting an advertising period and frequency (step C16).

After an advertising period and frequency are selected (step C17), the controller 7 computes the advertising fee in correspondence with the selected advertising area, period, and frequency (step C18), and displays the computed advertising fee (step C19).

The controller 7 then checks if the amount corresponding to the displayed advertising fee is inserted (step C20). If no amount is inserted after an elapse of a predetermined period of time, the controller 7 determines that registration is canceled, and returns to the main process.

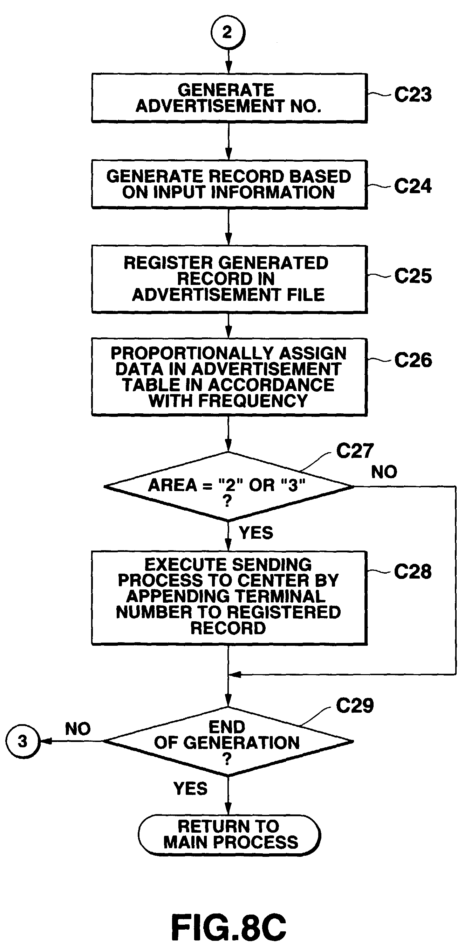

If the amount is inserted, the controller 7 displays an advertiser input guidance (step C21). If the advertiser name, contact address, or the like are input according to the guidance (step C22), the controller 7 starts the flow shown in FIG. 8C, and generates a new advertisement number (step C23).

The controller 7 generates advertisement information to be registered (to be referred to as a "record" hereinafter) on the basis of the input information (step C24). The controller 7 registers the generated record in an advertisement file in the storage unit (step C25).

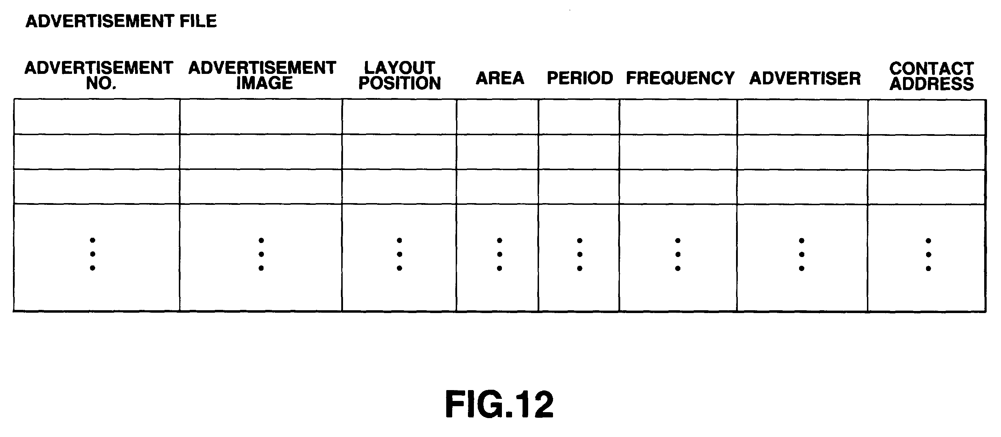

FIG. 12 shows the data format of the advertisement file. That is, a storage area designated by each advertisement number registers the input advertisement image, layout position, advertising area, advertising period, advertising frequency, advertiser name, and contact address data.

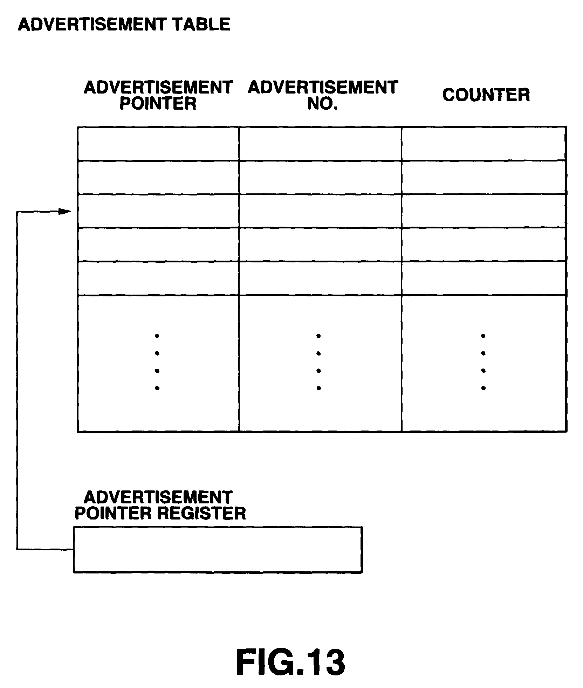

The controller 7 then assigns data in an advertisement table in proportion to the advertising frequency in the advertisement file (step C26). FIG. 13 shows the data format of the advertisement table. An advertisement image to be output is designated by an advertisement pointer of an advertisement pointer register.

Therefore, since the advertisement numbers corresponding in number to the advertising frequency are assigned to the advertisement table, when the advertisement pointer value of the advertisement pointer register is incremented, and the advertisement image to be designated changes in turn, advertisement images are output at a frequency corresponding to proportional assignment in the advertisement table. For example, when the frequency of a given advertisement number is tripled, the advertisement image of that advertisement number is output three times while the advertisement pointer changes from "1" to the last number.

After the proportional assignment in the advertisement table, the controller 7 checks if the advertising area of the recorded registered in the advertisement file is "2" (local area) or "3" (nationwide area) (step C27). If Y in step C27, the controller 7 appends the terminal number to the registered record, and sends it to the center apparatus (step C28). More specifically, the controller 7 calls the center apparatus to issue a connection request, and sends the record upon receiving a reply indicating connection OK. The controller 7 then checks if generation of an advertisement image is complete (step C29). If the advertisement registration button is turned on again, since advertisement images to be registered still remain, the flow returns to step C1 in FIG. 8A to repeat the advertisement registration process, so as to register the next advertisement image. On the other hand, if an end button is ON, since generation of an advertisement image is complete, the control returns to the main process.

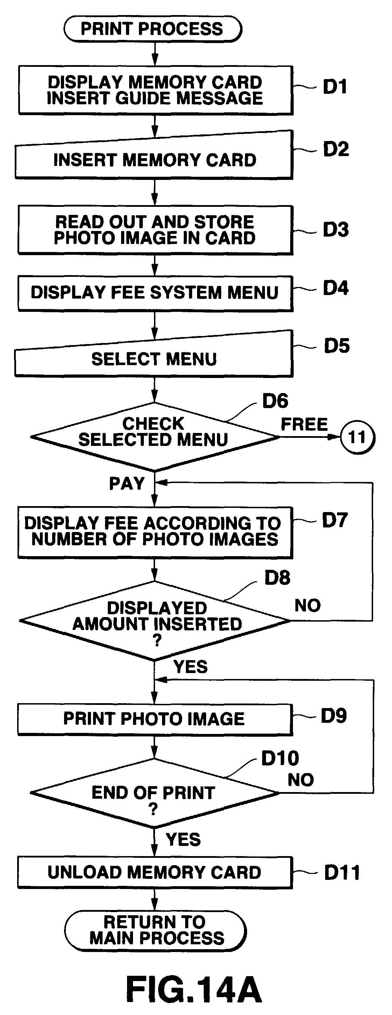

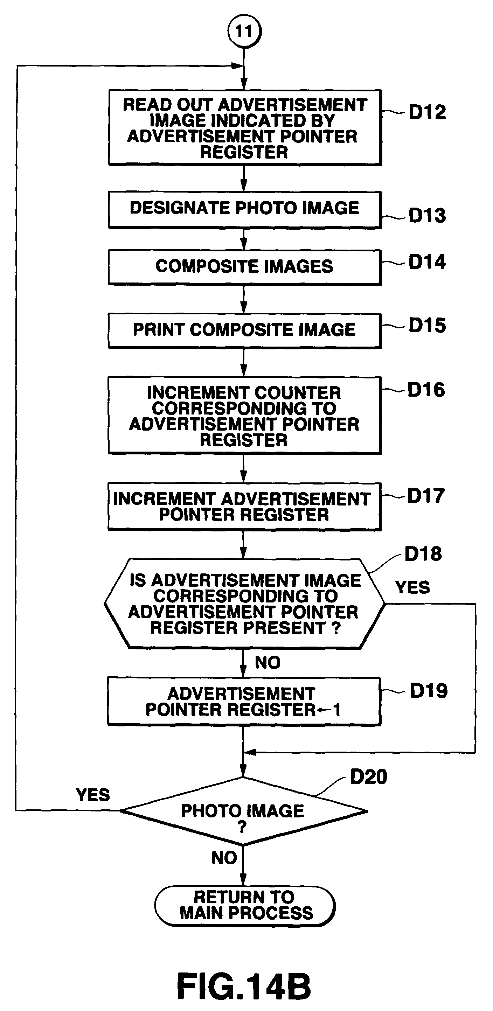

FIGS. 14A and 14B show the flow of the print process in step A4 in the flow of the main process of the terminal apparatus shown in FIG. 6. In the flow shown in FIG. 14A, the controller 7 displays a guide message for prompting the customer to insert a memory card on the display unit 6 (step D1). If the customer inserts a memory card (step D2), the controller 7 reads out and stores an image file in that memory card (step D3).

The controller 7 displays thumbnails of the stored images, and waits for a print designation input from the customer. If photo images to be printed are designated, the controller 7 displays a fee system menu for selecting a pay or free print process (step D4). If the customer selects a given menu item, the controller 7 checks if the selected menu item corresponds to a pay or free print process (step D6).

If the pay print menu item is selected, the controller 7 displays an amount corresponding to the number of designated photo images to be printed (step D7). The controller 7 then checks if the displayed amount is inserted (step D8). If the amount is inserted, the controller 7 prints a photo image (step D9).

The controller 7 then checks if all the designated photo images have been printed (step D10). If photo images to be printed still remain, the controller 7 repeats the print process in step D9. If all the designated photo images have been printed, the controller 7 unloads the memory card (step D11), and returns to the main process.

If the free print menu item is selected in step D6, the controller 7 starts the flow shown in FIG. 14B, reads out an advertisement image designated by the advertisement pointer set in the advertisement pointer register shown in FIG. 13 (step D12), and designates one of the photo images to be printed designated by the customer (step D13). The controller 7 deletes that portion of the designated photo image, which corresponds to the layout position designated in the advertisement file, composites the advertisement image in that portion (step D14), and prints the composite image (step D15).

The controller 7 increments the value of a counter, which corresponds to the advertisement pointer of the advertisement pointer register by "1" in correspondence with the number of print times (step D16). The controller 7 also increments the value of the advertisement pointer register by "1" (step D17), thus designating the next advertisement number.

The controller 7 checks if an advertisement image corresponding to the incremented advertisement pointer of the advertisement pointer register is registered (step D18). If no registered advertisement image is found, the controller 7 sets "1" in the value of the advertisement pointer register, i.e., sets the first advertisement pointer of the advertisement table (step D19).

The controller 7 then checks if designated photo images to be printed remain (step D20). If photo images to be printed remain, the flow returns to step D12 to repeat the processes up to step D20. If all designated photo images have been printed, the control returns to the main process.

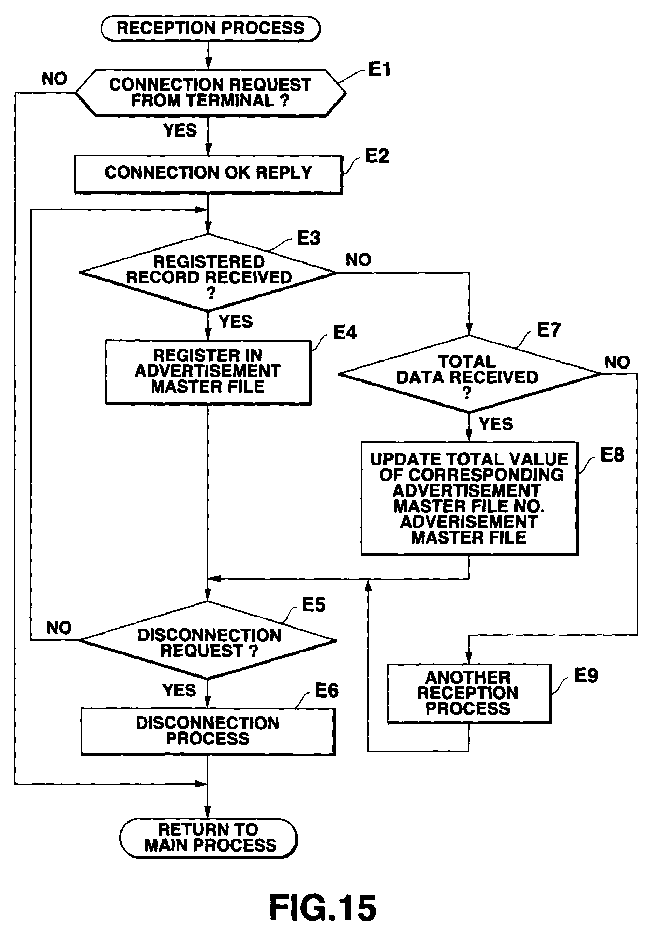

FIG. 15 shows the flow of the reception process in step B2 in the main process of the center apparatus shown in FIG. 7. In this flow, the CPU 30 checks if a connection request is received from a given terminal apparatus (step E1).

The connection request from the terminal apparatus is generated by the sending process to the center apparatus in step C28 if it is determined in step C27 that the advertising area is "2" (local area" or "3" (nationwide area) in the flow of the advertisement registration process of the terminal apparatus shown in FIG. 8C. That is, when the advertising area includes other terminal apparatuses in addition to the terminal apparatus in which the advertiser registers an advertisement, the registered record is sent to the center apparatus.

If the connection request from the terminal apparatus is detected in step E1 in FIG. 15, the CPU 30 sends a reply indicating connection OK (step E2). The CPU 30 checks if the registered record is received from the connected terminal apparatus (step E3).

If the registered record is received, the CPU 30 registers that record in the advertisement master file in the storage device (step E4).

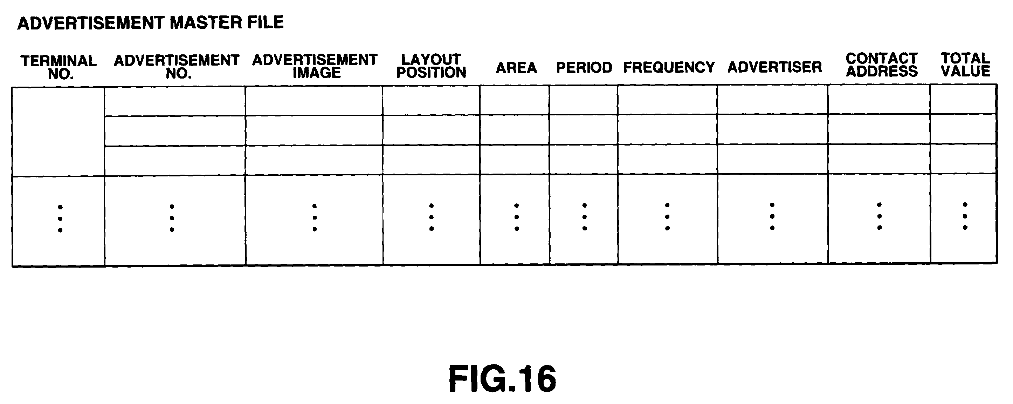

FIG. 16 shows the data format of the advertisement master file. As shown in FIG. 16, advertisement files of the individual terminal apparatuses are classified and stored in units of terminal numbers.

Furthermore, the advertisement master file has total value data areas in units of advertisement numbers. The total value data will be described later.

After the received record is registered in the advertisement master file, the CPU 30 checks if a disconnection request is received from the terminal apparatus (step E5). If no disconnection request is received, the flow returns to step E3 to wait for reception of the next registered record. If a disconnection request is received, the CPU 30 executes a disconnection process (step E6), and returns to the main process.

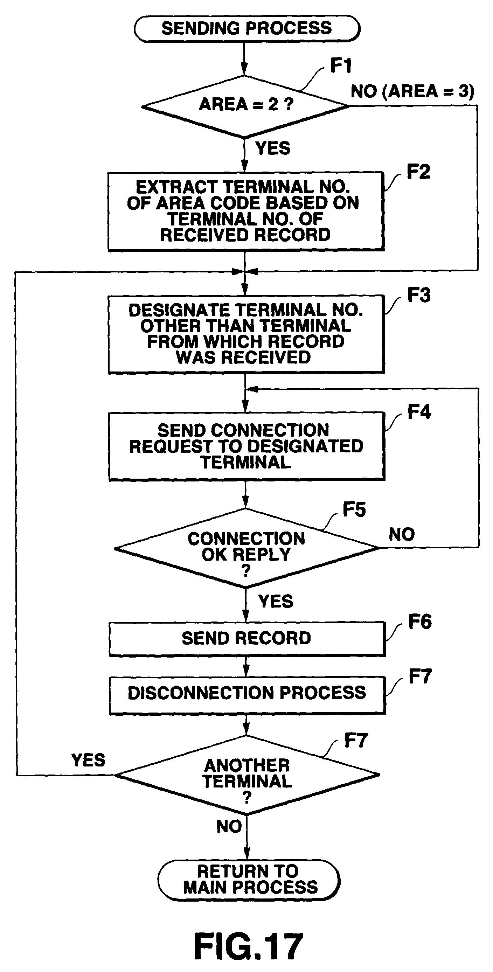

FIG. 17 shows the flow of the sending process in step B4 in the flow of the main process of the center apparatus shown in FIG. 7.

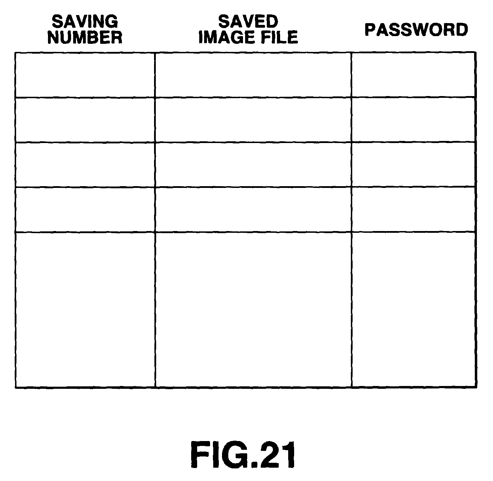

In the flow shown in FIG. 16, the CPU 30 checks if the advertising area of the record which has been received from the terminal apparatus and registered in the advertisement master file is "2" (local area) or "3" (nationwide area) (step F1). If the advertising area is "2" (local area), the CPU 30 acquires an area code of the area to which the terminal apparatus that sent the record belongs on the basis of its terminal number with reference to a terminal file shown in FIG. 21, and extracts the terminal numbers of other terminal apparatuses in the area indicated by that area code (step F2).

If the advertising area is "2" (local area), the CPU 30 designates the terminal numbers of other terminal apparatuses in that area other than the terminal apparatus from which the record has been received, or if the advertising area is "3" (nationwide area), the CPU 30 designates the terminal numbers of all terminal apparatuses except for the terminal apparatus from which the record has been received (step F3).

The CPU 30 requests one of the terminal apparatuses with the designated terminal numbers to establish a connection (step F4), and waits for a reply indicating connection OK from that terminal apparatus (step F5). Upon receiving a reply indicating connection OK, the CPU 30 sends the record newly registered in the advertisement master file, i.e., the record newly registered in an arbitrary terminal apparatus to the terminal apparatus with the designated terminal number (step F6). Upon completion of sending, the CPU 30 executes a disconnection process for that terminal apparatus (step F7).

The CPU 30 checks if terminal apparatuses to which the record is to be sent still remain (step F8). If Y in step F8, the flow returns to step F3 to designate the next terminal number. If the record has been sent to all the terminal apparatuses to which the record is to be sent, the control returns to the main process.

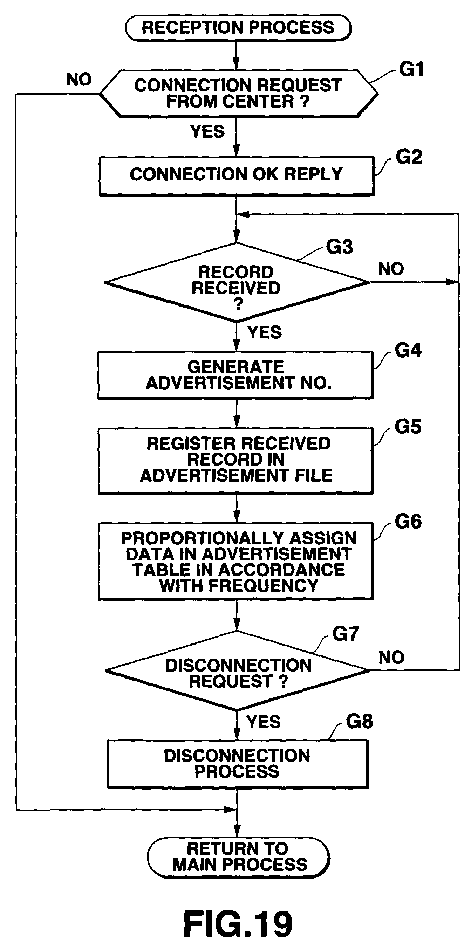

FIG. 19 shows the flow of the reception process in step A6 in the main process of the terminal apparatus shown in FIG. 6. In this flow, the controller 7 receives the record sent by the sending process of the center apparatus shown in FIG. 17.

More specifically, the controller 7 checks if a connection request is received from the center apparatus (step G1). If N in step G1, the control immediately returns to the main process; otherwise, the controller 7 sends a reply indicating connection OK (step G2).

The controller 7 checks if the record sent from the center apparatus is received (step G3). Upon receiving the record, the controller 7 generates a new advertisement number (step G4).

The controller 7 registers and saves the received record in the advertisement file in the storage unit (step G5). The controller 7 proportionally assigns data in the advertisement table in accordance with the advertising frequency in the registered record (step G6).

The controller 7 then checks if a disconnection request is received from the center apparatus (step G7). If N in step G7, the flow returns to step G3 to wait for reception of the next record from the center apparatus. If a disconnection request is detected, the controller 7 executes a disconnection process (step G8), and returns to the main process.

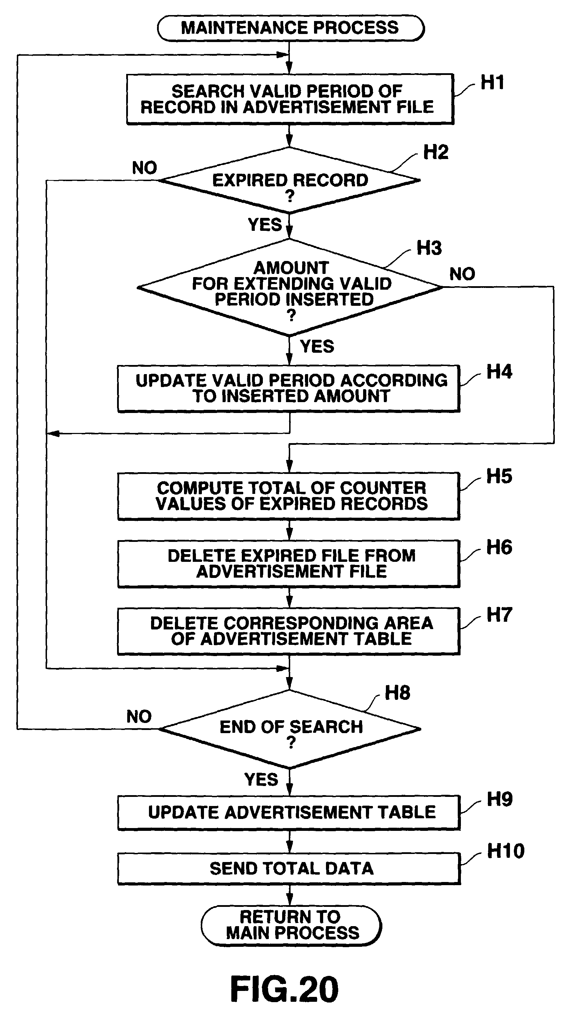

FIG. 20 shows the flow of the maintenance process in step A8 in the main process of the terminal apparatus shown in FIG. 6. The controller 7 searches the valid dates of the records in the advertisement file (step H1).

The controller 7 checks if an expired record is found (step H2). If an expired record is found, the controller 7 checks if a given amount for extending the valid date of that record is inserted (step H3).

If Y in step H3, the controller 7 updates the valid date in the advertisement file in accordance with the inserted amount. If N in step H3, the controller 7 computes and stores the total of the counter value of the expired record (step H5), and deletes the expired record from the advertisement file (step H6).

Also, the controller 7 deletes the corresponding area in the advertisement table (step H7). After this deletion process or after the valid date has been updated in step H4, the controller 7 checks if all the records have been searched (step H8). If records to be searched still remain, the flow returns to step H1 to proceed with the search process.

Upon completion of search, the controller 7 updates the advertisement table (step H9), and sends total data as the numbers of print times of all the expired records to the center apparatus (step H10). More specifically, the controller 7 sends a connection request to the center apparatus, and sends total data upon receiving a reply indicating connection OK. Upon completion of sending of the total data, the controller 7 executes a disconnection process, and returns to the main process.

In the flow of the reception process of the center apparatus shown in FIG. 15, if it is determined in step E3 that the received data is not a registered record, the CPU 30 checks if total data is received (step E7).

More specifically, the CPU 30 checks if the total data sent to the center apparatus in the maintenance process of the terminal apparatus is received. Upon receiving the total data, the CPU 30 updates the total values of the corresponding terminal number and advertisement numbers in the advertisement master file shown in FIG. 16 (step E8).

If data received from the terminal apparatus is neither a registered record nor the total, data, the CPU 30 executes another reception process (step E9). For example, the CPU 30 executes a reception process of a print paper replenishment request, printer error message, or the like. After the total values have been updated in step E8 or the reception process is executed in step E8, the CPU 30 checks in step E5 if a disconnection request is received from the terminal apparatus.

As described above, in the above embodiment, in the terminal apparatus which sells various kinds of information or goods that the customers want, and provides advertisements to the customers, advertisement information input by the advertiser is registered and saved in predetermined storage means, and the advertisement information stored in the storage means is read out and output every time the customer uses the terminal apparatus.

Therefore, since advertisement information can be input by simple operations in accordance with a menu and guidance displayed on the advertisement registration terminal apparatus, no troublesome procedures such as meeting with a third party are required upon placing an advertisement.

Since an advertisement is generated by operating the advertisement registration terminal apparatus by the advertiser himself or herself, the advertiser need not have an advertisement printing office form an advertisement. For this reason, since neither personnel expenses nor cost for creating any block copy are required, an advertisement having a high advertising effect can be placed at low cost.

Also, since advertisement information registered in a given terminal apparatus can be sent to another terminal apparatus via a communication line, the advertisement information can be registered and saved in a plurality of terminal apparatuses deployed over a broad range, and an advertisement can be placed for many customers.

Furthermore, as described in the above embodiment, an image of advertisement information saved in the storage unit is read out and composited with an image, which is designated by the customer to undergo a free print process, and the composite image is output to and printed by a predetermined print means (printer shown in FIG. 2 in the above embodiment). In this case, the designated image to be printed is a photo image sensed by a predetermined camera apparatus.

Therefore, the advertiser can place an advertisement with cost as low as the print fees of the customers, and the advertisement is put on printed photos which are not only seen by the customer himself or herself but also highly likely to be distributed to his or her family or friends, thus obtaining a high advertising effect.

Moreover, the valid date through which the input advertisement information is saved is set in accordance with the amount paid for the advertisement information. In this case, when an additional amount is paid for expired advertisement information, the valid date can be extended in accordance with the additional amount.

Therefore, when the advertiser wants to extend the advertising period since the high advertising effect is obtained, he or she needs not re-register the advertisement information. Also, when the advertiser temporarily places an advertisement for a given period, and wants to extend the advertising period since a high advertising effect is obtained, he or she need not re-register the advertisement information.

In such case, the expired advertisement information may be sent to and saved in the center apparatus by paying a low saving fee, and may be deleted from the terminal apparatus. When the advertiser wants to advertise again, he or she may pay an additional amount to restore the saved advertisement information.

In such case, since the advertisement information is saved in the center apparatus with a large storage capacity, the advertisement file of the terminal apparatus can be effectively used for another advertisement information.

Furthermore, the output frequency of the input advertisement information is set in accordance with the amount paid for that advertisement information.

Therefore, different frequencies can be set for an advertisement of information to be preponderantly posted, and that to be normally posted (i.e., a higher frequency is set for the advertisement of information to be preponderantly posted), thus setting a strategic advertising plan.

Also, a colorful image of advertisement information can be generated by selecting required part images and text images from a plurality of part images and text images that form the image of advertisement information. In the above embodiment, a plurality of advertisement frame patterns are prepared as part images, and the advertiser can select one of these advertisement frame patterns. In addition, various illustration images may be prepared, and one or a combination of these illustration images may be selected to generate an image of advertisement information.

Therefore, even when the advertiser is not accustomed to generation of an advertisement or generates an advertisement for the first time, he or she can generate a colorful image of advertisement information by simple operations by selecting and combining required ones of a plurality of part images and text images.

Furthermore, some sample advertising text samples (menu) may be prepared as text information, and the advertiser may select one of these samples effective for advertisement, and may partially modify the selected sample. In such case, since advertising text with a high advertising effect can be generated by simpler operations than generation of new advertising text by inputting characters, even an advertiser who is not good at writing document can easily generate advertising text.

In the above embodiment, the advertisement registration system in which the individual terminal apparatuses 1 are connected to the center apparatus 28 via the communication line has been explained. However, since a vegetable store, meat shop, shoe store, or the like as a small retailer need only advertise for neighboring customers, the advertisement area can be limited to one terminal apparatus.

More specifically, this situation corresponds to a case wherein the advertising area in the base fee system menu shown in FIG. 1 is "1" (only this terminal). In such case, the advertisement registration apparatus serves as a standalone apparatus upon registering an advertisement. More specifically, when the advertisement registration apparatus does not communicate with the center apparatus, it solely constitutes the invention of an advertisement registration apparatus.

In the above embodiment, the system operates in accordance with programs installed in the individual terminal apparatuses and center apparatus. Alternatively, a program may be recorded on a versatile recording medium such as a floppy disk, CD, MD, or the like, and the invention of a medium may be implemented.

When the advertisement registration apparatus is used as a standalone apparatus, a program is recorded on a versatile recording medium, and is loaded and executed by the apparatus.

That is, a program used in an advertisement registration terminal apparatus, which sells various kinds of information or goods that the customers want, and registers advertisements to be provided to those customers, is recorded on a versatile recording medium.

More specifically, a program that implements an input sequence for inputting advertisement information, a saving sequence for registering and saving the input advertisement information in predetermined storage means, and an output sequence for reading out and outputting the advertisement information saved in the storage means every time the customer uses the terminal is recorded on the recording medium.

### (Second Embodiment)

The second embodiment will be described below with reference to FIGS. 21 to 23.

Since the second embodiment commonly uses FIGS. 1, 2, 3, 4, and 5 in the first embodiment, a detailed description thereof will be omitted. In the second embodiment, the input device 31 inputs an image of advertisement information (to be referred to as an "advertisement image" hereinafter) provided by the advertiser. The input advertisement image is stored in the storage device 34.

FIG. 21 shows data in a saved image file stored in the storage device 34. The saved image file is composed of a plurality of photo image groups, which are saved in correspondence with saving numbers as saving identification information, and are respectively appended with passwords as customer identification information.

More specifically, one saving number and password can uniquely specify each saved photo image group. The saving number is determined by a terminal management apparatus 28, and the password is input by customer operations at each terminal apparatus.

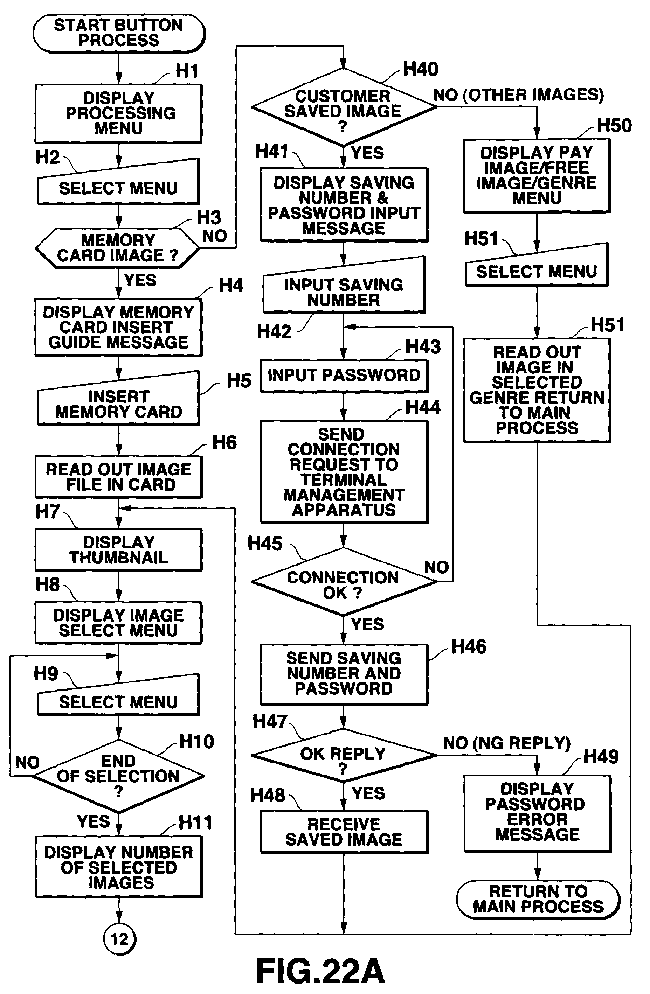

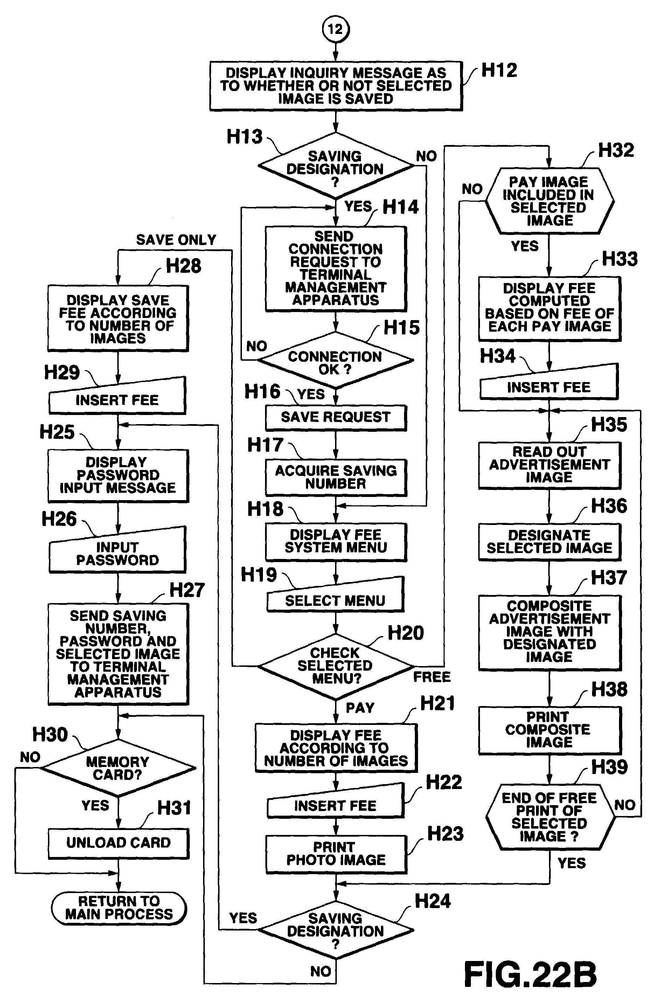

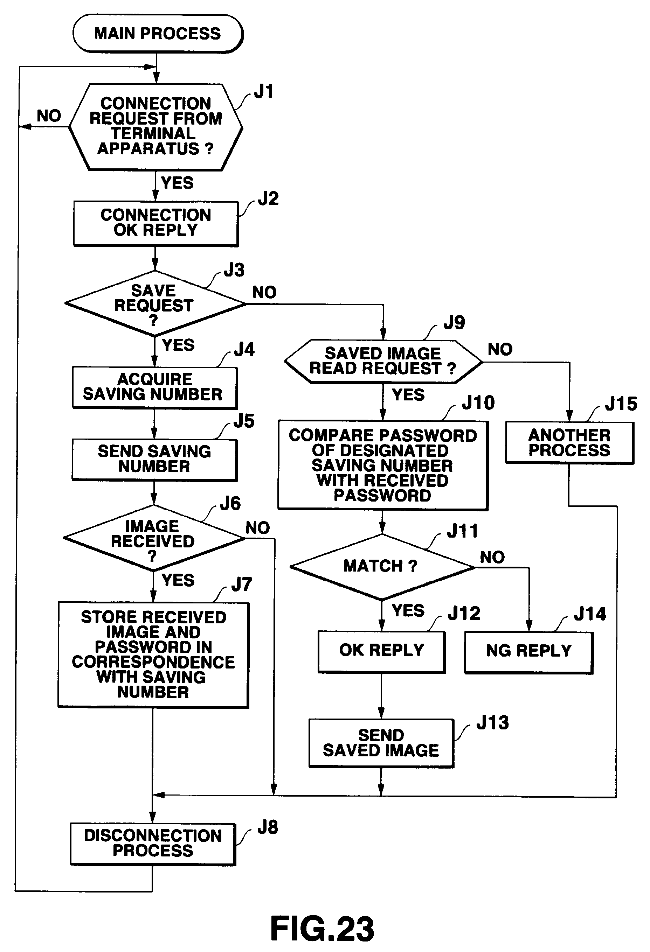

The operation of this embodiment will be described below with reference to the flow of a start button process of each terminal apparatus shown in FIGS. 22A and 22B, and the flow of a main process of the terminal management apparatus shown in FIG. 23.

Upon operation of a start button on the console 5 in a main process (not shown) of each terminal apparatus, the controller 7 starts the flow of a start button process. In the flow shown in FIG. 22A, the controller 7 displays a processing menu on the display unit 6 (step H1).

The processing menu includes three menu items; 1. a memory card image print/save menu item, 2. a read menu item of customer saved images, and 3. a read menu item of other images (a read menu of a plurality of genres of photo images of, e.g., movie stars, baseball players, and the like).

Note that other images include pay and free images depending on whether they are copyrighted. If the customer selects a given menu item (step H2), the controller 7 discriminates the selected menu item.

The controller 7 checks if the selected menu item is the memory card image print/save menu item (step H3). If Y in step H3, the controller 7 displays a guide message for prompting the customer to insert a memory card (step H4).

If the customer inserts a memory card (step H5), the controller 7 reads out an image file in that card, i.e., a plurality of photo images (step H6), and displays their thumbnails (reduced-scale images) (step H7). The controller 7 then displays an image select menu for selecting images to be printed (step H8).

If the customer designates photo images to be printed or saved by selecting a menu (step H9), the controller 7 checks if selection is to end (step H10). If the customer has operated a select end button, the controller 7 displays the number of selected images (step H11).

In the flow shown in FIG. 22B, the controller 7 displays a message that inquires of the customer as to whether or not the selected photo images are saved (step H12). The controller 7 checks if saving designation is selected (step H13). If Y in step H13, the controller 7 sends a connection request to the terminal management apparatus (step H14), and requests the terminal management apparatus to save photo images (step H16) upon receiving a reply indicating connection OK from the terminal management apparatus (step H15).

In the main process of the terminal management apparatus shown in FIG. 23, the CPU 30 checks if a connection request is received from the terminal apparatus (step J1). If Y in step J1, the CPU 30 sends a reply indicating connection OK (step J2). The CPU 30 checks if a photo image saving request is received from the terminal apparatus (step J3).

If Y in step J3, the CPU 30 searches the storage device to acquire an unused saving number (step J4). The CPU 30 sends the saving number to the terminal apparatus (step J5).

In the terminal apparatus, the controller 7 acquires the saving number sent from the terminal management apparatus in step H17. The controller 7 then displays a fee system menu (step H18).

The fee system menu includes three menu items; 1. pay print, 2. saving only, and 3. free print. If the customer selects a given menu item (step H19), the controller 7 discriminates the selected menu content (step H20). If the pay print menu item is selected, the controller 7 displays a fee in accordance with the number of images to be printed (step H21).

If the photo images to be printed are other images (photo images of movie stars, baseball players, and the like), and include copyrighted pay images, the controller 7 adds the fee of the pay images to the print fee, and displays the sum. If the fee is inserted (step H22), the controller 7 prints the photo images (step H23). Upon printing, if saving designation is selected, the saving number is printed on the back surface of each printed photo.

In the print process in step H23, the controller 7 merely outputs print data to a given printer, and the actual print process is independent from that of the controller. Therefore, the processing time in step H23 is very short, and the communication line remains connected during this processing.

More specifically, upon completion of output of print data, the flow immediately advances to step H24. That is, upon completion of output of print data of all the selected photo images, the controller 7 checks if saving designation is selected (step H24). If Y in step H24, the controller 7 displays a message that prompts the customer to input a password (step H25). If a password is input (step H26), the controller 7 sends a saving number, password, and selected images to the terminal management apparatus (step H27).

In the terminal management apparatus, the CPU 30 checks in step J6 if a saving number, password, and selected images are received from the terminal apparatus. If Y in step J6, the CPU 30 stores the received images and password in the storage device in correspondence with the saving number (step J7). Then, the CPU 30 executes a disconnection process from the terminal apparatus (step J8).

As a result, the image file data shown in FIG. 21 are saved in the storage device of the terminal management apparatus. If no selected images are received after an elapse of a predetermined period of time, the CPU 30 executes a disconnection process (step J8). After the disconnection process, the flow returns to step J1 to wait for a connection request from another terminal apparatus.

In the terminal apparatus, if the "only save" menu item is selected in step H20, the controller 7 displays a saving fee in accordance with the number of photo images to be saved (step H28). If the fee is inserted (step H29), the controller 7 displays a message that prompts the customer to input a password as in the pay print process (step H25). If a password is input (step H26), the controller 7 sends the saving number, password, and selected images to the terminal management apparatus (step H27).

After all selected images to be saved are sent to the terminal management apparatus, the controller 7 checks if a memory card is present (step H30). If Y in step H30, the controller 7 unloads the memory card (step H31). The control then returns to the main process.

If the free print menu item is selected in step H20, the controller 7 checks if the selected images are other images (photo images of movie stars, baseball players, and the like), and include copyrighted pay images (step H32). If pay images are included, the print fee is free but a fee for the pay images is required. In such case, the controller 7 computes the fees of the pay images, and displays a total fee (step H33).

If the fee is inserted (step H34), the controller 7 reads out an advertisement image (step H35). Also, the controller 7 designates one of photo images (selected images) which are to undergo the free print process (step H36). The controller 7 then composites the advertisement image with the designated photo image (step H37).

The controller 7 prints the composite image (step H38). In this case, if saving designation is selected, the acquired saving number is printed on the back surface of the printed photo. The controller 7 checks if all the selected images which are to undergo the free print process have been printed (step H39). If selected images which are to undergo the free print process still remain, the flow returns to step H35 to repeat processes up to step H38.

Upon completion of the print process of the selected images which are to undergo the free print process, the flow advances to step H24 to execute processes up to step H31. In this case, upon printing other images, since no memory card is loaded, the absence of a card is determined in step H30, and the control returns to the main process. Hence, the control skips the card unloading process in step H31.

If the selected menu item is not the memory card image print/save menu item in step H3, the controller 7 checks if the customer saved image read menu item is selected (step H40). If Y in step H40, the controller 7 displays a message that prompts the customer to input a saving number and password (step H41).

If a saving number is input (step H42) and a password is input (step H43), the controller 7 sends a connection request to the terminal management apparatus (step H44). The controller 7 checks if a reply indicating connection OK is received (step H45). Upon receiving a reply, the controller 7 sends the saving number and password to the terminal management apparatus together with a saved image read request (step H46).

In the terminal management apparatus, after a connection is established with the terminal apparatus, if the saved image read request is detected in step J9, the CPU 30 compares the password of the designated saving number with the received password (step J10).

The CPU 30 checks if the two password match (step J11). If Y in step J11, the CPU 30 sends back a reply indicating that the password is OK (step J12), and sends the requested saved images (step J13). If the two password do not match, the CPU 30 sends back a reply indicating that the password is NG (step J14).

Therefore, the CPU 30 does not send any saved images. After the saved images are sent in step J13 or the NG reply is sent in step J14, the flow advances to step J8 to execute a disconnection process. On the other hand, if the received request is not a saved image read request but a request for another process, the CPU 30 executes that process (step J15), and the flow advances to step J8 to execute a disconnection process.

In the terminal apparatus, the controller 7 checks if an OK reply is sent back in response to the password sent in step H46 (step H47). Upon receiving the OK reply, the controller 7 receives the saved images that follow the reply, and stores them in the storage unit (step H48). The flow then advances to step H7 to display thumbnails of the received saved image. After that, the controller 7 executes the same processes as those executed upon selecting the memory card image print/save menu item. On the other hand, if an NG reply is received in step H47, the controller 7 displays a message indicating that the password is NG on the display unit (step H49), and returns to the main process.

If the selected menu item is not the customer saved image read menu item in step H40, i.e., if the read menu item of other images is selected, the controller 7 displays a genre menu indicating copyrighted pay images, free images, and genres (entertainment, sports, and the like) of images already stored in the own apparatus (step H50).

If the customer selects a given menu item (step H51), the controller 7 reads out images in the selected genre (step H51). The flow then advances to step H7 to display thumbnails of the readout images. After that, the controller 7 executes the same processes as those executed upon selecting the memory card image print/save menu item. Upon printing other images, since no memory card is loaded, the absence of a card is determined in step H30, and the control returns to the main process. Hence, the control skips the card unloading process in step H31.

As described above, in the second embodiment, an image is sent from each terminal apparatus to the terminal management apparatus which can connect to a plurality of terminal apparatuses that output images by customer operations via communications, and is saved in the terminal management apparatus. An arbitrary terminal apparatus reads out and outputs the saved image. That is, as has been described in the above embodiment, the terminal apparatus receives and prints an image saved in the terminal management apparatus.

Therefore, even when a recording medium becomes full of data during image sensing, subsequent image sensing can be continued without deleting images recorded on that recording medium.

Also, extra copies of a photo to be distributed to a plurality of friends at different remote places can be simultaneously delivered in real time.

Furthermore, since a large number of photo images that were sensed, e.g., on a journey with many other things to do can be carefully reviewed after his or her return home, and only required ones can be printed, unwanted images can be prevented from being printed, and the user needs not carry a large number of printed photos.

In the second embodiment, the terminal management apparatus saves an image received from each terminal apparatus together with saving identification information (saving number), and an arbitrary terminal apparatus prints the saving identification information received from the terminal management apparatus together with the received image.

Therefore, a group of associated photo images can be designated on the basis of the saving number of the printed photos, and it is convenient to work with research or experiment data.

In the second embodiment, an arbitrary terminal apparatus prints an image received from the terminal management apparatus or an image that the customer inputs to that apparatus. In such case, the terminal apparatus checks if advertisement information is appended to that image, and prints an image with or without the advertisement information in accordance with the checking result.

Hence, when the customer does not have enough money, e.g., on a journey, he or she can select a free print process with the advertisement information, and can re-select a pay print process of photo images without any advertisement information after his or her return home.

In the above embodiment, the terminal management apparatus receives and saves customer identification information (password) input at each terminal apparatus together with an image received from that terminal apparatus. Upon receiving a saved image read request from an arbitrary terminal apparatus, the terminal management apparatus requests that terminal apparatus to send customer identification information. Only when the customer identification information received from that terminal apparatus matches the customer identification information saved together with the image to be read out, the terminal management apparatus sends the readout image to that terminal apparatus.

Therefore, the customer can protect his or her saved images from being printed by a third party without permission. Furthermore, when the customer needs only inform a friend to whom the customer grants a print permission of his or her password and saving number, that friend can obtain extra copies of photos at his or her nearby terminal apparatus. Hence, the customer can deliver photos more quickly than a case wherein he or she makes extra copies by himself or herself and sends them via mail.

In the above embodiment, the image saving system operates according to programs installed in advance in the terminal apparatus 1 shown in FIG. 1, and the terminal management apparatus 28 shown in FIG. 4. Alternatively, a program may be recorded on a versatile recording medium such as a floppy disk, CD, MD, or the like, and the invention of a medium may be implemented.

## Claims

1. A terminal apparatus (1) for providing an advertisement to a customer, characterized by comprising:
input means (5) for inputting advertisement information;
saving means (15) for registering and saving the input advertisement information in predetermined storage means; and
output means (FIG. 8A) for reading out and outputting the advertisement information saved in said storage means every time the customer uses said apparatus.

2. An apparatus according to claim 1, characterized in that said output means reads out and composites an image of the advertisement information saved in said storage means with an image to be printed, which is designated by the customer, and outputs the composite image to predetermined print means to make the print means print the image.

3. An apparatus according to claim 2, characterized in that the image of the advertisement information is a photo image sensed by a predetermined camera apparatus.

4. An apparatus according to claim 1, characterized in that said saving means sets a valid period (C16) of saving the advertisement information in correspondence with an amount paid for the input advertisement information.

5. An apparatus according to claim 4, characterized in that said saving means extends the valid period in correspondence with an additional amount paid for the advertisement information, the valid period of which has expired.

6. An apparatus according to claim 1, characterized in that said output means sets an output frequency (C17) of the advertisement information in correspondence with an amount paid for the input advertisement information.

7. An apparatus according to claim 1, characterized in that said input means selects a required part image and text image from a plurality of part images and text images that form the image of the advertisement information.

8. An advertisement registration system including a plurality of terminal apparatuses (1) in each of which advertisement information for a customer who uses the terminal apparatus is registered, and a terminal management apparatus (28) which is connected to said plurality of customer terminal apparatuses via communications,
wherein each of said terminal apparatuses registers and saves input advertisement information in predetermined storage means, reads out and outputs the advertisement information saved in said storage means every time the customer uses the terminal apparatus, and sends the newly saved advertisement information to said terminal management apparatus (C28), and
when said terminal management apparatus receives advertisement information from an arbitrary terminal apparatus and an advertising area included in the received advertisement information designates another terminal apparatus other than the arbitrary terminal apparatus, said terminal management apparatus transfers the received advertisement information to the other terminal apparatus and makes that terminal apparatus save the received advertisement information.

9. A system according to claim 8, characterized in that each of said terminal apparatuses displays an advertisement fee to be paid in correspondence with a selected advertising area.

10. A system according to claim 8, characterized in that each of said terminal apparatuses reads out and composites an image of the advertisement information saved in said storage means with an image to be printed, which is designated by the customer, and outputs the composite image to predetermined print means to make the print means print the image.

11. A recording medium which records a first program used in each of terminal apparatuses in a system including a plurality of terminal apparatuses (1) in each of which advertisement information for a customer who uses the terminal apparatus is registered, and a terminal management apparatus (28) which is connected to said plurality of customer terminal apparatuses via communications, and a second program used in said terminal management apparatus,
said first program including a saving sequence for registering and saving the input advertisement information in predetermined storage means, an output sequence for reading out and outputting the advertisement information saved in said storage means every time the customer uses the terminal apparatus, and a sending sequence for sending the newly saved advertisement information to said terminal management apparatus (C28), and
said second program including a reception sequence (B2 in FIG. 7) for receiving advertisement information from an arbitrary terminal apparatus, a checking sequence (B3) for checking if an advertising area included in the received advertisement information designates another terminal apparatus other than the arbitrary terminal apparatus, and a transfer sequence (B4) for transferring the received advertisement information to the other terminal apparatus and making that terminal apparatus save the received advertisement information when it is determined in the checking sequence that the advertising area designates the other terminal apparatus.

12. An image saving system including a plurality of terminal apparatuses (1) each of which outputs an image by a customer operation, and a terminal management apparatus (28) which is connected to said plurality of terminal apparatuses via communications,
wherein when the customer designates to save an image, each of said terminal apparatuses sends the image to be saved to said terminal management apparatus (H27), and
said terminal management apparatus saves the image received from the terminal apparatus (J7), and sends an image to be read out to an arbitrary terminal apparatus upon receiving a saved image read request from the arbitrary terminal apparatus (J13).

13. A system according to claim 12, characterized in that the arbitrary terminal apparatus receives (H48) and prints (H23, H38) an image saved in said terminal management apparatus.

14. A system according to claim 13, characterized in that said terminal management apparatus saves the image received from the terminal apparatus together with saving identification information (J7), and the arbitrary terminal apparatus prints the saving identification information received from said terminal management apparatus together with the image received from said terminal management apparatus.

15. A system according to claim 13, characterized in that the arbitrary terminal apparatus prints an image received from said terminal management apparatus or an image that the customer inputs to that terminal apparatus, checks if advertisement information is appended to the image, and prints an image with or without the advertisement information in accordance with the checking result (H23, H38).

16. A system according to claim 12, characterized in that said terminal management apparatus receives and saves customer identification information input at the terminal apparatus together with an image received from that terminal apparatus, requests an arbitrary terminal apparatus to send customer identification information upon receiving a saved image read request from the arbitrary terminal apparatus, and sends an image to be read out to the arbitrary terminal apparatus when the customer identification information received from the arbitrary terminal apparatus matches the customer identification information saved together with the image to be read out (J9-J13).

17. A recording medium which records a first program used in each of terminal apparatuses in a system including a plurality of terminal apparatuses each of which outputs an image by a customer operation, and a terminal management apparatus which is connected to said plurality of customer terminal apparatuses via communications, and a second program used in said terminal management apparatus,
said first program including a sending sequence (H27) for sending an image to be saved, which is designated by a customer, to said terminal management apparatus upon designation of the saving of an image from a customer (H24), and
said second program including a saving sequence for saving the image received from the terminal apparatus, and a sending sequence for sending an image to be read out to an arbitrary terminal apparatus upon receiving a saved image read request from the arbitrary terminal apparatus.
